# EUROPEAN PATENT SPECIFICATION

(11) **EP 1 063 117 B1**
(45) Date of publication and mention of the grant of the patent: **14.01.2004**
(21) Application number: 00113509.4
(22) Date of filing: 26.06.2000
(51) Int. Cl.: B60K 15/035, F02M 25/08

(54) **A device for recovery and control of the fuel vapours in a tank of a vehicle**
Vorrichtung zur Rückgewinnung und Kontrolle von Kraftstoffdämpfen in einem Fahrzeugtank
Dispositif de récupération et de contrôle de vapeur de carburant pour un réservoir d'un véhicule

(30) Priority: 25.06.1999 IT TO990549
(43) Date of publication of application: 27.12.2000
(73) Proprietor: FIAT AUTO S.p.A., 10135 Torino (IT)
(72) Inventor: Fiore, Nicola, 10071 Borgaro Torinese (IT); Riaudo, Marco, 10048 Vinovo (IT)
(74) Representative: Eccetto, Mauro

(56) References cited:
- DE-A- 4 304 180
- DE-A- 19 609 322
- FR-A- 2 774 950
- US-A- 3 730 158
- US-A- 4 701 198
- US-A- 5 704 337

## Description

The present invention relates to a device for recovery and control of the fuel vapours in a tank of a vehicle, as described in the preamble of claim 1. The features of the preamble of claim 1 belong to the common knowledges of the skilled person in the technical field.

Known vehicles with an internal combustion engine have a fuel storage tank comprising a tank and a device for recovery of the fuel vapours, which can keep the pressure inside the tank below a pre-determined limit. The recovery device generally comprises an activated carbon device, which is usually known by the term of a canister, is interposed between the tank and the engine, and can absorb the fuel vapours which are present in excess in the tank. For example, US 5,704,337 and US 4,701,198 (fig. 10) disclose canisters in which the activated carbon is placed in a chamber integrally formed with a tube for filling fuel into the tank.

In some applications, the recovery device additionally comprises a fuel vapour condenser or separator, which is interposed between the tank and the activated carbon, in order to condense part of the vapours output from the tank, and to separate the gaseous fuel from the liquid fuel, such as to prevent the latter from reaching the activated carbon, and thus reducing the efficiency of the latter.

In general, the activated carbon device and the vapour separator are disposed in series on the vehicle, in positions which are spaced from one another, and the system is provided with piping for connection of the vapour separator to the tank, and of the activated carbon device to the engine, as well as with intermediate piping which extends between the two, for a relatively long section in the vehicle.

The above-described fuel storage system, and in particular the device for recovery of the fuel vapours, has relatively high costs and lengthy times for production and for installation on the vehicle.

In fact, firstly, for production of the recovery device, it is necessary to produce separately the vapour separator, the activated carbon device and the various connection pipings, in particular using different moulding lines to obtain the activated carbon device and the vapour separator, whereas, in addition, during installation of the system on the vehicle, the activated carbon device and the vapour separator must be rendered integral with the vehicle in their respective positions, and must be connected respectively to the engine and to the tank by means of the corresponding piping, as well as to one another, by means of the intermediate piping, which must also be secured to the vehicle with extreme care, in order to prevent safety problems.

In fact, the intermediate piping which contains fuel vapours can be dangerous in terms of environmental pollution and/or possible fires in the vehicle, in the event of breakage or faulty sealing of the piping itself.

The object of the present invention is to provide a device for recovery and control of the fuel vapours in a tank of a vehicle, which makes it possible to solve the above-described problems.

According to the present invention, a device is provided for recovery and control of the fuel vapours in a tank of a vehicle according to claim 1.

The invention will now be described with reference to the attached drawings, which illustrate a nonlimiting embodiment, in which:
figure 1 illustrates schematically a preferred embodiment of the device according to the present invention, for recovery and control of the fuel vapours in a fuel storage system for a vehicle;
figure 2 illustrates the device in figure 1, schematically , in cross-section, and on an enlarged scale; and
figure 3 illustrates a variant of the device in figure 2.

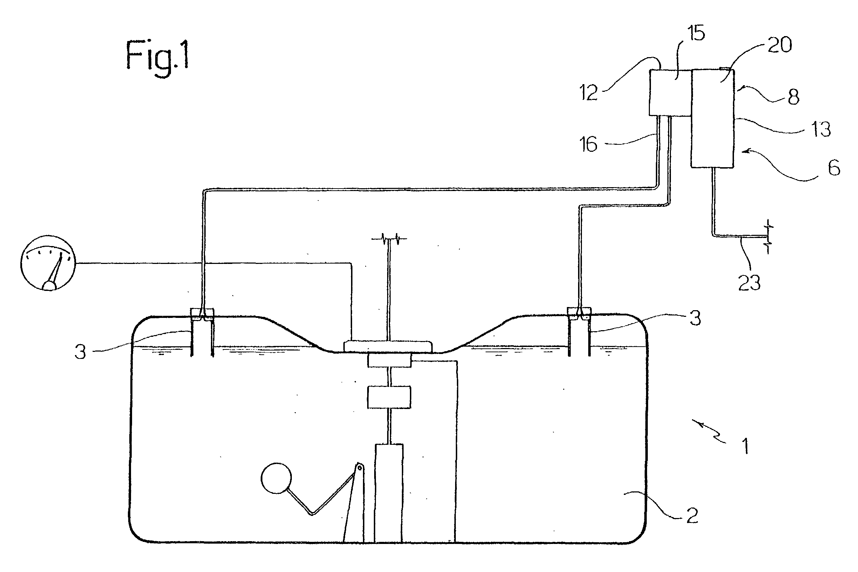

In figure 1, 1 indicates a system (illustrated schematically) for storage of fuel for a vehicle, comprising a tank 2, which contains the fuel to be supplied to an internal combustion engine (not shown) of the vehicle, and accommodates two known float valves 3, to vent the fuel vapours which are present in excess in the tank 2.

The system 1 additionally comprises a device 6 (illustrated schematically), which is placed in position above the tank 2, for recovery and control of the fuel vapours, and can keep the pressure in the tank 2 below a pre-determined limit value.

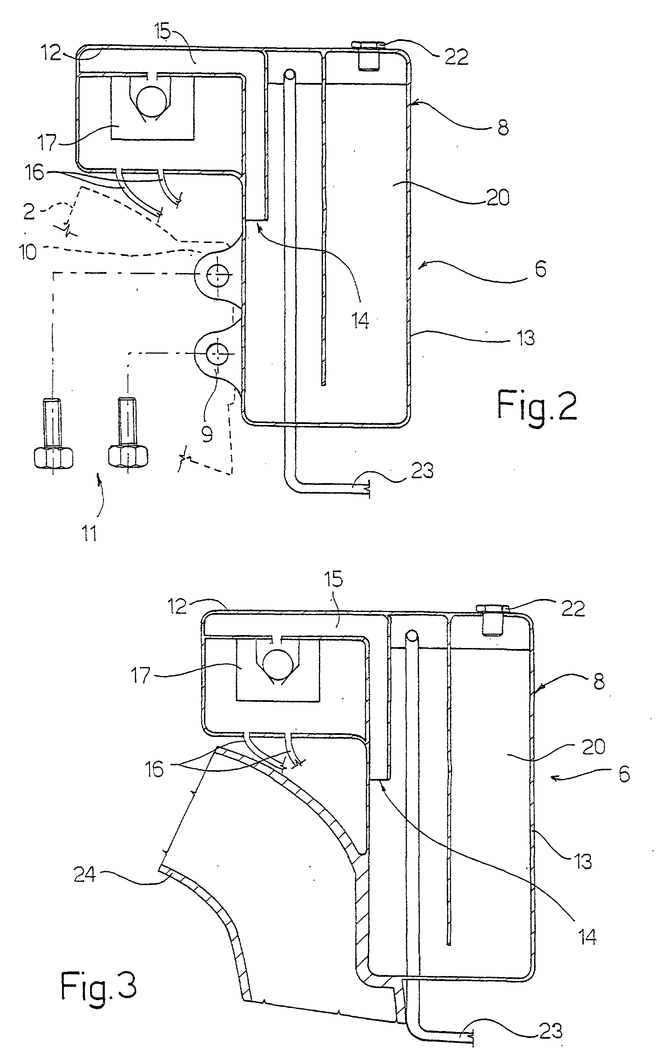

As illustrated in figure 2, the device 6 comprises a case 8, which is produced in a single piece, preferably by injection moulding, and in turn comprises an attachment portion 9, which is connected by means of a detachable connection device 11, for example a pair of screws or bolts, to a portion of the tank 2, which is illustrated schematically in figure 2 by means of a broken line, and is indicated as 10.

The case 8 additionally comprises a pair of hollow portions 12 and 13, which are disposed in series, and communicate with one another by means of an inner aperture 14.

The portion 12 accommodates a known vapour separator or condenser 15 (illustrated schematically), which is connected to the float valves 3 by means of corresponding piping 16, in order to condense part of the vapours output from the tank 2, and to separate the liquid fuel from the gaseous fuel. The separator 15 is provided with a known valve 17, which can inhibit the flow of liquid fuel if the vehicle is tilted, and keep the tank 2 pressurised below the pre-determined limit value.

On the other hand the portion 13 accommodates an activated carbon device 20 (illustrated schematically), which is known and is usually indicated by the term canister, which communicates with the outer environment by means of a venting valve 22, and through which there passes the remaining part of the fuel vapours obtained from the aperture 14, in order to be absorbed and accumulated. The fuel vapours are then desorbed and released towards the engine by means of corresponding output piping 23, by the effect of the suction generated by the engine itself.

According to the variant illustrated in figure 3, the device 6 comprises a pipe 24 (illustrated partially) for feeding of fuel into the tank 2, which is produced integrally with the case 8, preferably by being blown. According to a variant, not shown, the pipe 24 of the device 6 is connected to the case 8, and in particular it is connected integrally.

In use, with the vehicle in motion, the pressure in the tank 2 tends to increase, substantially owing to the movements of agitation of the fuel in the tank 2 itself. The separator 15 processes the fuel vapours output from the tank 2, via the float valves 3, separating the condensed liquid fuel from the gaseous fuel. The separator 15 allows the gaseous fuel to flow towards the device 20, whereas it accumulates the liquid fuel, preventing it from reaching the activated carbon, which would otherwise be affected by fluid, such that its efficiency would be greatly reduced. When the vehicle is at a standstill, the pressure in the tank 2 itself tends to be reduced once more, and the liquid fuel which has accumulated in the separator 15 flows towards the tank 2 once more.

In addition, the efficiency of the activated carbon device 20 is safeguarded by the valve 17, which, as well as carrying out a function of safety if the vehicle is tilted, prevents the fuel, whilst it is being re-supplied, from exceeding a maximum predetermined level in the tank 2, reaching the upper area of the system 1, and therefore the device 20.

From the foregoing description, it is apparent that the device 6 makes it possible to recover the fuel vapours and to control their flow, it has relatively low costs, and makes it possible to limit the costs and times both of production and installation of the system 1.

In fact, the separator 15 and the activated carbon device 20 are produced using a single production line, and it is not necessary to produce intermediate piping to connect the former to one another, since they are accommodated respectively in the portions 12 and 13 which form part of the same case 8.

The times and costs for production of the system 1 can then be further reduced if the pipe 24 constitutes part of the case 8, and is therefore produced on the same production line as the device 20 and the separator 15.

Installation of the device 6 on the vehicle is extremely simple and economical, since it is sufficient to secure the single case 8 to the vehicle, and to connect the device 6 to the valves 3 and to the engine, by means of the corresponding piping 16 and 23 respectively, unlike the known solutions, in which it is necessary to secure two separate bodies to the vehicle, and to connect them to one another by means of intermediate piping, which must also be secured to the vehicle.

The fact itself of having a single case 8, instead of two separate bodies with intermediate connection piping, improves the reliability of the device 6 and of the system 1 compared with the known solutions, since a smaller number of connections ensures better sealing of the fuel vapours in the system 1, with consequent improvement of the protection against the dangers of fire and environmental pollution.

In addition, the fact that the device 6 is connected to the portion 10, and in particular to the pipe 24 of the tank 2, facilitates installation of the device 6 on the vehicle, and makes it possible to adapt the system 1 easily to the standards for protection against environmental pollution, which make it obligatory to recover the vapours output from the pipe 24 during the re-supply of fuel, by providing additional venting piping (not shown), which is interposed between the pipe 24 itself and the activated carbon device 20.

Finally, it is apparent from the foregoing that modifications and variants which do not depart from the field of protection of the present invention can be made to the device 6 illustrated and described.

In particular, the case 8 could have a shape and structure different from those illustrated and described by way of example.

## Claims

1. Device (6) for recovery and control of the fuel vapours in a tank (2) of a vehicle; the device comprising means (15) for condensation and separation of fluids from gases, which are accommodated in a first case (12), and can be connected to the said tank (2) in order to condense a part of the fuel vapours output from the said tank (2) and to separate the condensed liquid fuel from the remaining part of said fuel vapours, and means (20) for accumulation of vapours, which are accommodated in a second case (13), and are disposed in series with the said condensation and separation means (15), and though which the said remaining part of said fuel vapours passes; **characterised in that** said first (12) and second (13) cases constitute part of a single body (8).

2. Device according to claim 1, **characterised in that** the said body (8) is produced in a single piece.

3. Device according to claim 1 or claim 2, **characterised in that** it comprises connection means (11), to connect the said body (8) to a portion (10) of the said tank (2).

4. Device according to claim 3, **characterised in that** the said connection means (11) are detachable connection means (11).

5. Device according to any one of the preceding claims, **characterised in that** the said body (8) additionally comprises a pipe (24) for feeding the fuel into the said tank (2).

6. Device according to claim 5, **characterised in that** the said pipe (24) is produced in a single piece with the said body (8) .

## Patentansprüche

1. Vorrichtung (6) zur Rückgewinnung und Steuerung der Brennstoffdämpfe in einem Tank (2) eines Fahrzeugs; wobei die Vorrichtung Mittel (15) zur Kondensation und Trennung von Fluiden von Gasen, die in einem ersten Behälter (12) untergebracht sind und mit dem Tank (2) verbunden werden können, um einen Teil der von dem Tank (2) ausgegebenen Brennstoffdämpfe zu kondensieren und den kondensierten flüssigen Brennstoff von dem verbleibenden Teil der Brennstoffdämpfe zu trennen, und Mittel (20) zur Speicherung von Dämpfen umfasst, die in einem zweiten Behälter (13) untergebracht und mit den Kondensations- und Trennungsmitteln (15) in Reihe angeordnet sind, und durch die der verbleibende Teil der Brennstoffdämpfe läuft; **dadurch gekennzeichnet, dass** der erste (12) und zweite (13) Behälter einen Teil eines einzigen Körpers (8) bilden.

2. Vorrichtung gemäß Anspruch 1, **dadurch gekennzeichnet, dass** der Körper (8) in einem einzigen Stück hergestellt ist.

3. Vorrichtung gemäß Anspruch 1 oder Anspruch 2, **dadurch gekennzeichnet, dass** sie Verbindungsmittel (11) umfasst, um den Körper (8) mit einem Abschnitt (10) des Tanks (2) zu verbinden.

4. Vorrichtung gemäß Anspruch 3, **dadurch gekennzeichnet, dass** die Verbindungsmittel (11) demontierbare Verbindungsmittel (11) sind.

5. Vorrichtung gemäß einem der vorhergehenden Ansprüche, **dadurch gekennzeichnet, dass** der Körper (8) zusätzlich ein Rohr (24) zum Zuführen des Brennstoffs in den Tank (2) umfasst.

6. Vorrichtung gemäß Anspruch 5, **dadurch gekennzeichnet, dass** das Rohr (24) in einem einzigen Stück mit dem Körper (8) hergestellt ist.

## Revendications

1. Dispositif (6) pour la récupération et la régulation des vapeurs de carburant dans un réservoir (2) d'un véhicule ; le dispositif comprenant des moyens (15) pour la condensation et la séparation de fluides à partir de gaz, qui sont logés dans un premier boîtier (12) et peuvent être raccordés audit réservoir (2) afin de condenser une partie des vapeurs de carburant sorties dudit réservoir (2) et de séparer le carburant liquide condensé de la partie restante desdites vapeurs de carburant, et des moyens (20) pour l'accumulation de vapeurs, qui sont logés dans un second boîtier (13) et sont disposés en série avec lesdits moyens de condensation et de séparation (15), et à travers lesquels passe ladite partie restante desdites vapeurs de carburant; **caractérisé en ce que** lesdits premier (12) et second (13) boîtiers constituent une partie d'un seul corps (8).

2. Dispositif selon la revendication 1, **caractérisé en ce que** ledit corps (8) est produit en une seule pièce.

3. Dispositif selon la revendication 1 ou 2, **caractérisé en ce qu'**il comprend des moyens de raccord (11) pour raccorder ledit corps (8) à une partie (10) dudit réservoir (2).

4. Dispositif selon la revendication 3, **caractérisé en ce que** lesdits moyens de raccord (11) sont des moyens de raccord détachables (11).

5. Dispositif selon l'une des revendications précédentes, **caractérisé en ce que** ledit corps (8) comprend en outre un tuyau (24) pour délivrer le carburant dans ledit réservoir (2).

6. Dispositif selon la revendication 5, **caractérisé en ce que** ledit tuyau (24) est produit en une seule pièce avec ledit corps (8).
